# EUROPEAN PATENT SPECIFICATION

(11) **EP 1 424 269 B1**
(45) Date of publication and mention of the grant of the patent: **07.11.2007**
(21) Application number: 03027043.3
(22) Date of filing: 24.11.2003
(51) Int. Cl.: B62D 65/00

(54) **System for handling vehicle bodies in processing stations, in particular for cars and industrial motor vehicles**
Vorrichtung zur Behandlung von Fahrzeugkarosserien in Bearbeitungsstationen, insbesondere für PKW und Arbeitsfahrzeuge
Dispositif pour le traitement de carrosseries de véhicule dans un poste d'usinage, notamment pour voitures et véhicules de travail

(30) Priority: 28.11.2002 IT MI20022526
(43) Date of publication of application: 02.06.2004
(73) Proprietor: GEICO S.p.A., I-20092 Cinisello Balsamo, Milano (IT)
(72) Inventor: Covizzi, Giampaolo, 20092 Cinisello Balsamo Milano (IT)
(74) Representative: Cicogna, Franco

(56) References cited:
- EP-A- 0 379 207
- WO-A-02/051695
- GB-A- 2 373 766
- US-A1- 2001 037 562

## Description

### BACKGROUND OF THE INVENTION

The present invention relates to an automatic system for processing vehicle bodyworks, and in particular car and industrial vehicle bodyworks.

Prior vehicle bodywork processing systems conventionally comprise a processing track or rail for driving therealong a shuttle assembly supporting a carrying skid which is driven to different processing basins.

The supporting shuttle assembly comprises a hanging element which is so controlled as to transfer the skid assembly to the processing stations.

This arrangement, however, provides a very complex system construction; in fact, it is necessary to provide a overhead supporting line for driving therealong the shuttle assemblies, which involves great difficulties in modifying the track path, as requires.

The document WO 02/051 695 to the same Applicant discloses substantially the preamble of claim 1.

### SUMMARY OF THE INVENTION

Accordingly, the aim of the present invention is to overcome the above mentioned problems, by providing an automatic system for processing vehicle bodyworks and, in particular, car and motor vehicle bodyworks, allowing to greatly simplify the vehicle track, while eliminating any auxiliary elements for supporting and holding skid assemblies carrying the providing an automatic system for processing vehicle bodyworks and, in particular, car and motor vehicle bodyworks, allowing to greatly simplify the vehicle track, while eliminating any auxiliary elements for supporting and holding skid assemblies carrying the motor vehicle bodyworks to be processed.

Within the scope of the above mentioned aim, a main object of the present invention is to provide such an automatic system which is very flexible operation-wise, and can be easily expanded, as required, without involving complex constructional modifications.

Another object of the present invention is to provide such an automatic system which is very safe from an operation standpoint and which allows to easily control the vehicle bodywork processing line, with the advantage of selecting at will the processing operations to be carried out.

Another object of the present invention is to provide such an automatic system allowing to quickly perform different displacement and processing operating cycles, depending on the motor vehicles to be processed.

Yet another object of the present invention apparent hereinafter, are achieved by an automatic system for processing vehicle bodyworks, and in particular car and industrial motor vehicle bodyworks, according to claim 1.

### BRIEF DESCRIPTION OF THE DRAWINGS

Further characteristics and advantages of the present invention will become more apparent hereinafter from the following disclosure of a preferred, though not exclusive, embodiment of an automatic system for processing vehicle bodyworks, in particular car and industrial vehicle bodyworks, which is illustrated, by way of an indicative, but not limitative example, in the accompanying drawings, where:
Figure 1 is a schematic top plan view illustrating the automatic system according to the invention;
Figure 2 is a schematic cross-sectional view illustrating an arch member or element before engaging a skid;
Figure 3 is a further cross-sectional view bodywork into at least a processing basin being moreover provided.

### BRIEF DESCRIPTION OF THE DRAWINGS

Further characteristics and advantages of the present invention will become more apparent hereinafter from the following disclosure of a preferred, though not exclusive, embodiment of an automatic system for processing vehicle bodyworks, in particular car and industrial vehicle bodyworks, which is illustrated, by way of an indicative, but not limitative example, in the accompanying drawings, where:

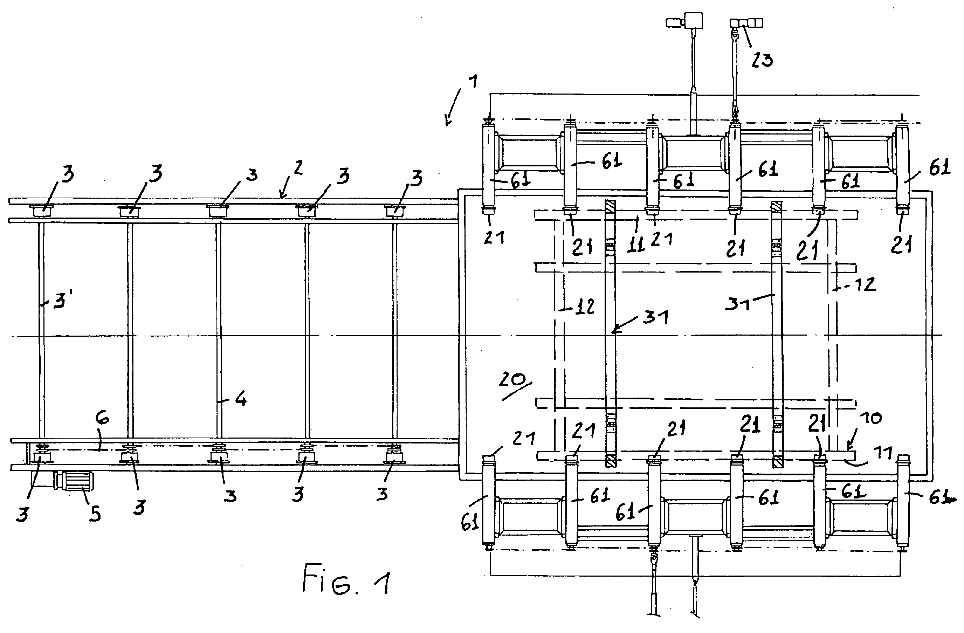

Figure 1 is a schematic top plan view illustrating the automatic system according to the invention;

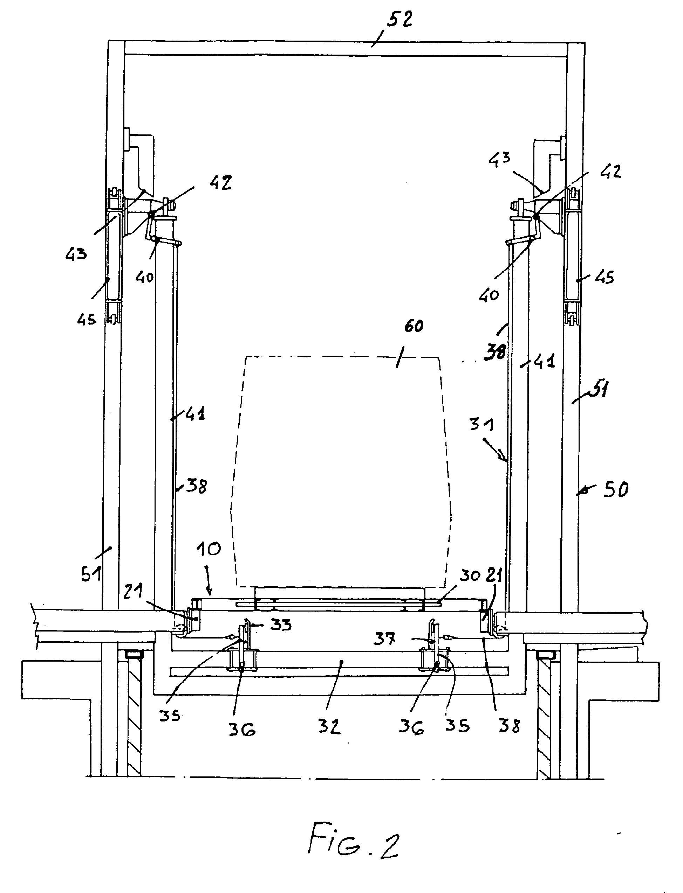

Figure 2 is a schematic cross-sectional view illustrating an arch member or element before engaging a skid;

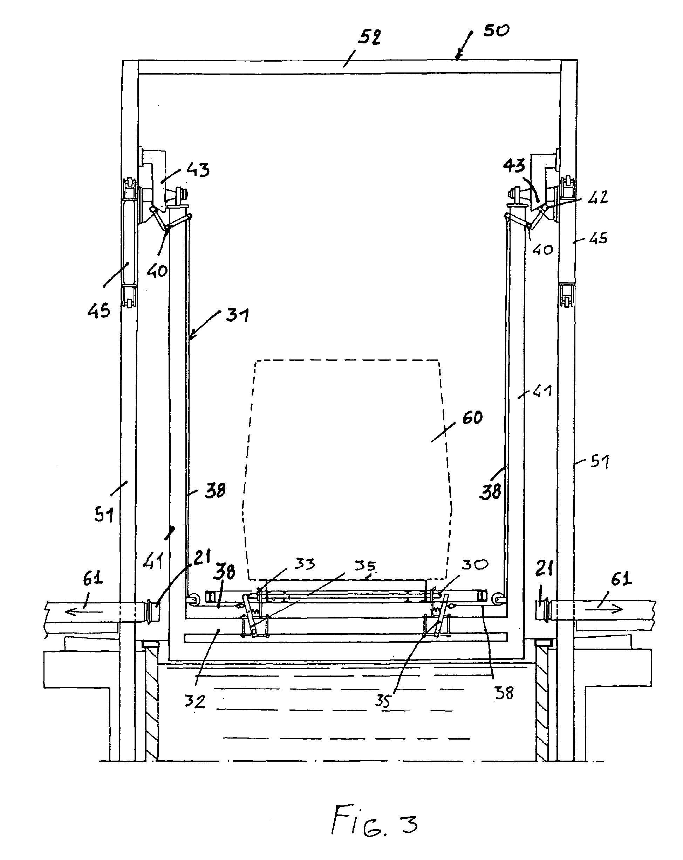

Figure 3 is a further cross-sectional view illustrating the automatic system according to the present invention, in an operating step in which an arch member and a skid assembly are mutually engaged;

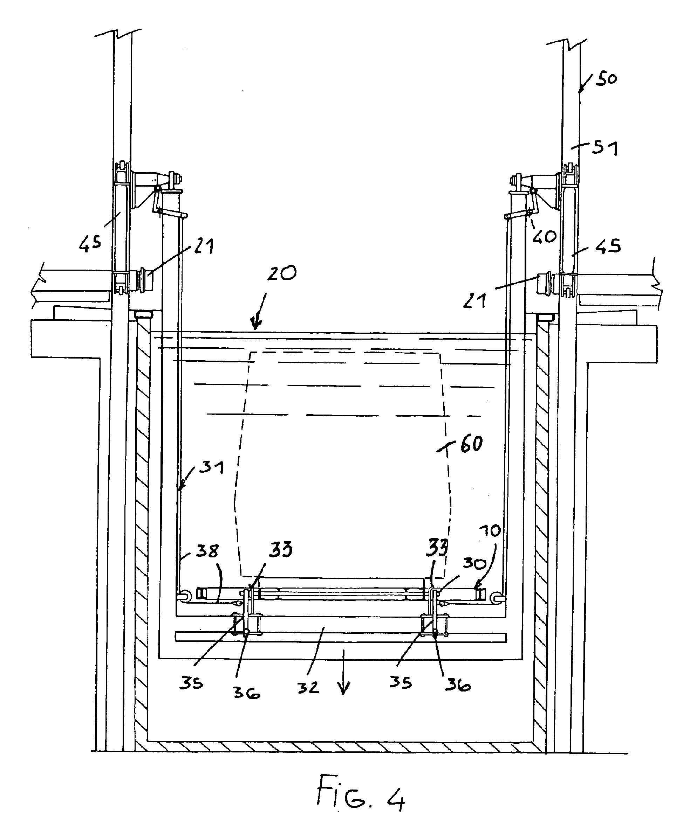

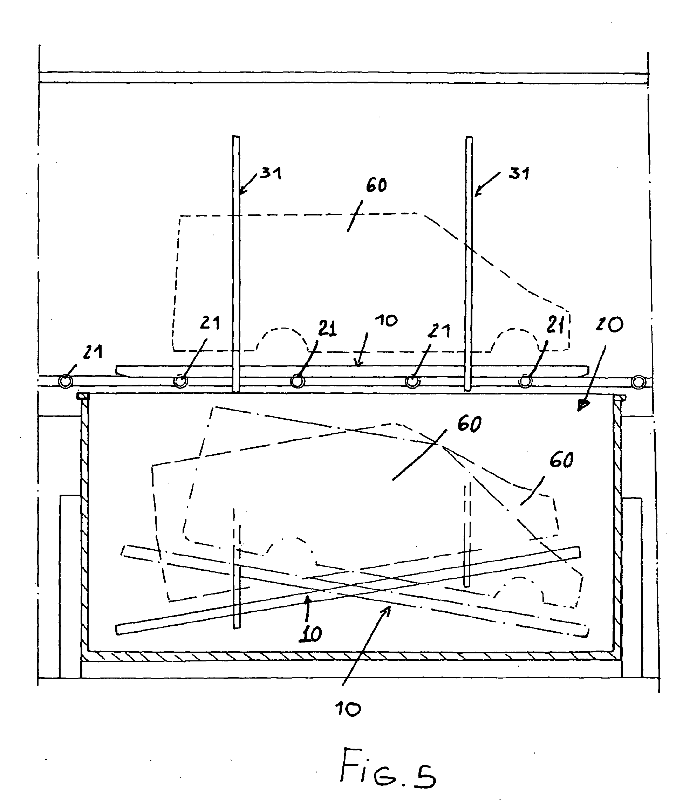

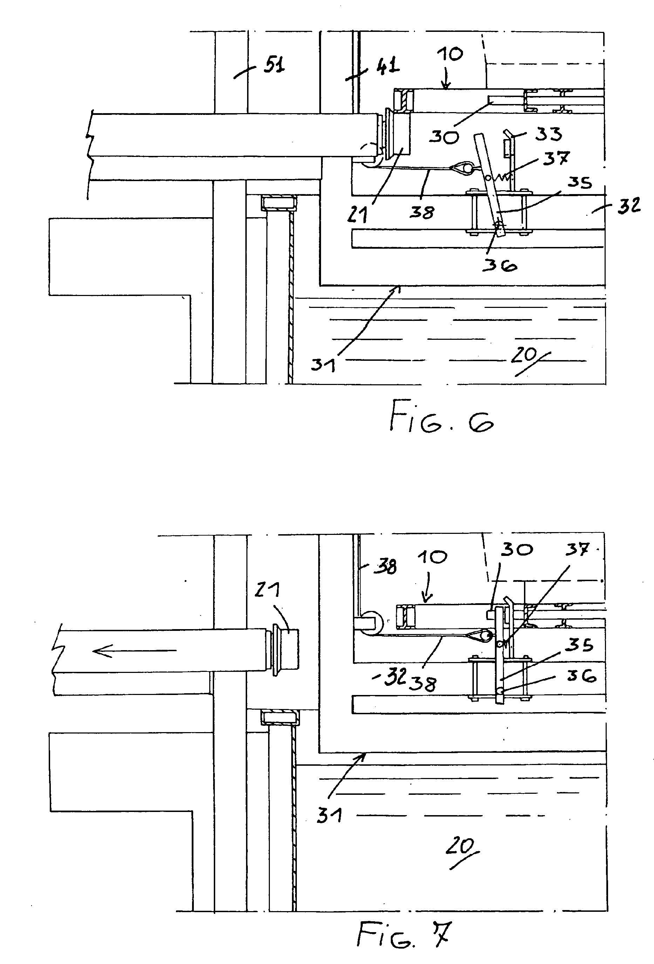

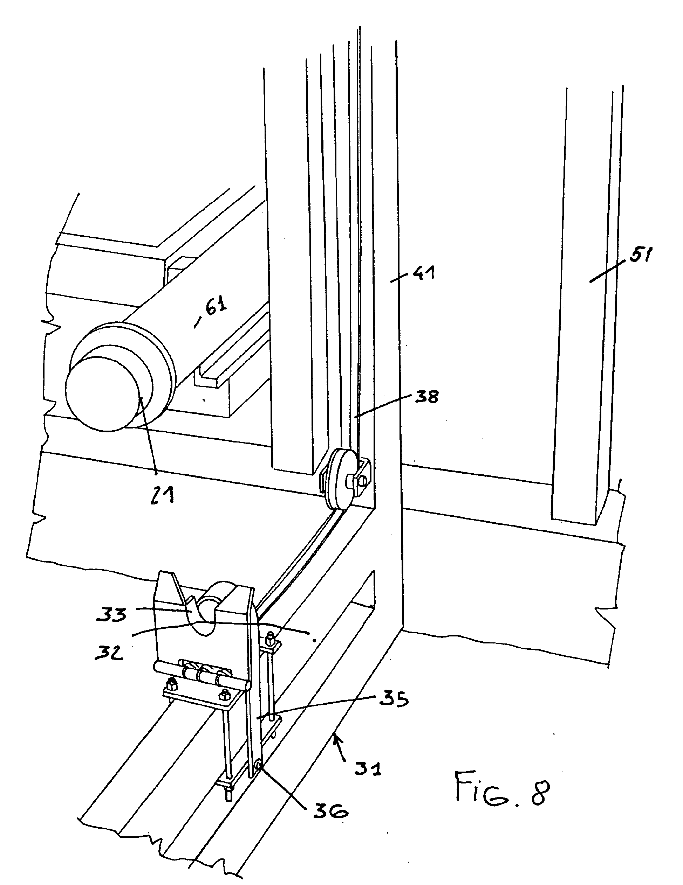

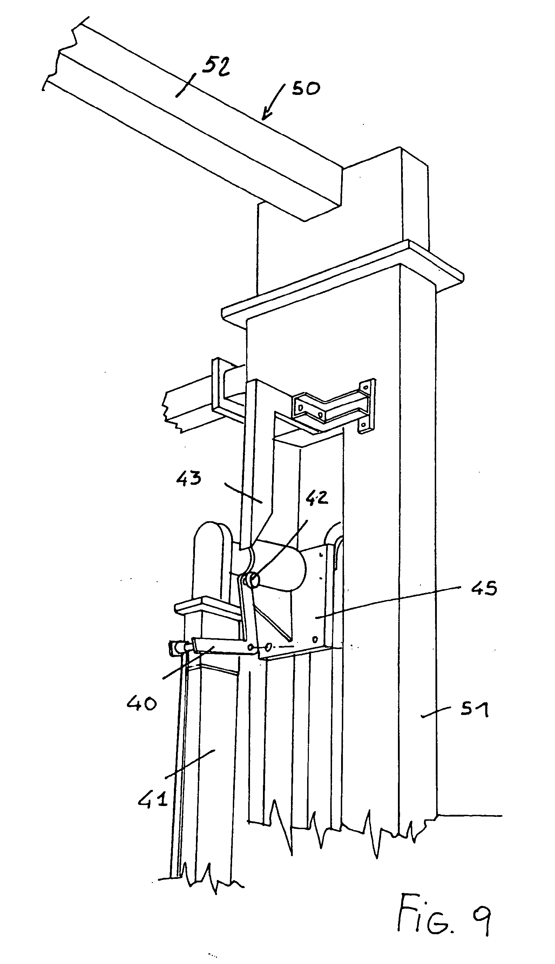

Figure 4 illustrates an operating step of the subject automatic system in which the skid assembly is lowered into a processing basin;
Figure 5 is a further schematic view illustrating the arch elements being driven to bring a skid assembly to a slanted condition as the vehicle bodywork is introduced into a processing basin;
Figure 6 show a tie-rod assembly for opening locking means, in an opened condition thereof;
Figure 7 schematically shows the tie-rod for opening said locking means, in a closure position thereof;
Figure 8 schematically shows by a perspective view said locking means in a closure position thereof; and
Figure 9 is a schematic view showing a cam assembly for cooperating with an arch member for driving said tie-rod.

### DESCRIPTION OF THE PREFERRED EMBODIMENTS

With reference to the number references of the above mentioned figures, the automatic system for processing vehicle bodyworks and, in particular, car and industrial bodyworks, according to the present invention, which has been generally indicated by the reference number 1, comprises an operating track 2, including an operating table having a plurality of opposite rollers 3, which are connected by cross shafts 4.

Said cross shafts 4, in particular, are driven by a geared motor 5, which, more specifically, drives a driven shaft 3' which, through driving chains 6 and pinions 7, offset from one another, drives in turn all said rollers 3.

As shown, the rollers 3 support a skid assembly 10, formed by longitudinal members 11 connected by cross members 12.

The longitudinal members or elements 11 are slidably driven on the rollers 3, to cause the skid assembly, carrying thereon the vehicle bodywork 60, to be driven to the processing basins, generally indicated by the reference number 20, for performing successively thereon any desired processing operations or treatments, such as pickling and washing operations, phosphatizing operations, further washing operations by water or demineralized water, painting operations and so on.

The system according to the invention provides to use a variable number of processing basins 20 and, accordingly, allows to easily modify its production yield, at any desired times, and also after a first installation of the system.

In fact, to improve the processing capability of the system, it is sufficient to change or increase the number of the processing basins.

Moreover, the subject automatic system has been specifically designed for allowing to process a lot of different types of bodyworks, and/or for carrying out a lot of different processing operations, depending on the material constituting said bodyworks 60.

For example, for aluminium bodyworks, some processing operations will not be carried out, thereby speeding up the overall processing of these aluminium bodyworks 60.

This is obtained by conveying in succession a plurality of bodyworks 60 and omitting unnecessary processing operations.

In this case, some bodyworks 60 are introduced into the processing basins 20, and are bypassed, at a higher level, by other bodyworks which must not be processed likewise.

To perform such a bypass operation, at each processing basin 20, a plurality of basin rollers, indicated by the reference number 21, are arranged by pairs and in a mutually opposite relationship.

The basin rollers 21, in particular, are operatively driven by a pair of independent motors 23, preferably of a step type, the operating speeds of which can be easily synchronized.

The reciprocating rectilinear movement of the basin rollers 21 and of the shafts 61 supporting said rollers, is controlled by other motors, through screw assemblies, or crank and connecting rod assemblies, or hydraulic cylinders.

Said driving motors 23 being controlled by proximity sensors, preferably three for each side.

One of said proximity sensors, as a carrying skid passes therethrough, causes the driving speed of the motor to be decreased.

A second proximity sensor, as it is engaged by the skid, causes the motor to be stopped, while a third proximity sensor, arranged downstream of the driving device, will confirm the stop condition.

The basin rollers 21 are supported, in an axially movable manner, so as to disengage from the skid 10, as the latter must be introduced into a desired processing basin 20.

On said skid assembly, are provided a plurality of locking pins 30, which laterally project and are designed for cooperating with the arch members 31, provided in a number of two for each processing basin.

More specifically, said arch members or elements 31 have a substantially U-shape and are provided, on the bottom cross member 32 of the U-shape, with a pair of fork elements 33, designed for engaging with said locking pins 30 to take up a skid assembly, as it will become more apparent hereinafter.

Locking means for locking said pins are moreover provided, said locking means comprising a curved element 35, which is pivoted at 36 at its bottom end portion to the cross member 32 and which are counter-biassed by return spring 37, which causes said curved elements to be clamped on the mentioned pins.

Moreover, are also provided a plurality of unlatching tie-rods 38, operating at the top end portions of the curved elements 35, and which, at the top thereof, are coupled to a swinging lever 40, supported by an upright 41 of the arch member and provided with a small roller 42 cooperating with a slanted surface cam 43.

The latter is coupled to the fixed framework 50, arranged above the processing basin, so as to open, as the arch member is raised at the start of the operation, the locking means, as is clearly shown in figure 3.

During this operating step, the arch member will take up the skid assembly, by raising it from the basin rollers 21, which, accordingly, will be free of axially translating so as to disengage the top end portion of the basin, while allowing the arch members to be lowered inside said basin.

During this operating step, the arch member pair is lowered in a differentiated manner, to provide a series of swinging movements of the skid assembly allowing the bodywork to be introduced in a slanted arrangement and causing possible air bubbles, susceptible to be accumulated inside the bodywork and of the top walls of the bodywork, to be easily evacuated.

In this manner, a perfect processing of the box-like inner surfaces of the bodyworks will be assured, preventing air bubbles from hindering a proper adhesion of the product which must be applied during the different processing operations.

In this connection it should be pointed out that, as each arch member is raised up to its top end of stroke position, it will automatically drive the cams, for unlatching or disengaging the side curved elements engaging the pins.

As the arch members are lowered, they will firmly lock the skid laterally projecting pins, allowing the skid assemblies to be perfectly clamped.

With the arch member in a lowered position, it is possible to properly arrange again the basin rollers 21, thereby allowing a skid to easily pass the processing basin.

As shown, the arch members are driven by driving carriages 45 sliding on the uprights 51 of the framework 50.

From the above disclosure it should be apparent that the invention fully achieves the intended aim and objects.

In particular, the invention provides an automatic system for processing vehicle bodyworks and, in particular, car and industrial vehicle bodyworks, which allows to use processing tracks which does not include suspended constructions, and which are very flexile from an operating standpoint and can be easily modified to fit a lot of different bodywork styles.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shapes, can be any, depending on requirements.

## Claims

1. An automatic system (1) for processing vehicle bodyworks (60), in particular car and industrial motor vehicle bodyworks (60), said automatic system comprising a processing track (2) therealong a bodywork (60) supporting skid assembly (10) is slidably driven, said track (2) including at least a bodywork (60) processing basin (20), where a pair of taking arch elements (31) for removing said skid from said track (2) are provided, said arch members (31) being driven by driving means for introducing said bodywork (60) into said at least a processing basin (20), said processing track also including a plurality of pairs of opposite rollers (3), **characterized in that** said pairs of opposite rollers directly support and drive said skid assembly (20), **in that** said automatic system (1) further comprises, at said at least a processing basin (20), pairs of basin rollers (21) opposite to one another and supported by driving means for axially driving said rollers, for disengaging said rollers from said skid assembly, said driving means comprising a pair of independent step motors (23), **in that** said basin rollers are further driven with a rectilinear reciprocating motion by other dedicated driving motors, through screw assemblies, or connecting rod and crank assemblies or through hydraulic cylinders, **in that** said step motors (23) are driven by proximity sensors, and that said proximity sensors comprise a proximity sensor for reducing the operating speed of said step motors, a second proximity sensor for stopping said step motors, and a third proximity sensor for confirming the stop condition.

2. An automatic system (1), according to claim 1, **characterized in that** said rollers (3) comprise, for each pair, a cross shaft (4) including, at an end portion thereof, pinion elements (7), arranged with an offset relationship, for entraining driving chains (6), a geared motor (5) for driving said cross shaft (4) being moreover provided.

3. An automatic system, according to the preceding claims, **characterized in that** said automatic system further comprises, on said arch members, locking means which are removably engaged with said skid assembly.

4. An automatic system, according to one or more of the preceding claims, **characterized in that** said locking means comprise a reversed curved element arranged at an upwardly open fork defined on said arch members, said curved element being coupled to resilient return means for engaging with said pins, tie-rods for disengaging said curved elements in an open position being moreover provided.

5. An automatic system, according to one or more of the preceding claims, **characterized in that** said automatic system is driven by an electronic system driving the displacements of said bodyworks or other articles of manufacture, so as to subject said bodyworks or articles of manufacture to a plurality of different processing operations, by using a series of successively arranged processing basins.

6. An automatic system, according to one or more of the preceding claims, **characterized in that** said automatic system is designed for selectively causing a plurality of bodyworks of articles of manufacture to be processed to be successively supplied, with a possibility of bypassing other supporting skid assemblies, of said basins in which articles of manufacture are arranged during their processing operations.

7. An automatic system, according to one or more of the preceding claims, **characterized in that** said automatic system comprises cam means for driving said curved elements for driving in turn said arch members with respect to the processing basin.

8. An automatic system, according to one or more of the preceding claims, **characterized in that** said cams are provided with slanted cam surfaces which can be engaged with swinging levers arranged at end portions of said arch members and that said cams engage with swinging levers as said arch elements are raised for engaging said skid assembly.

## Patentansprüche

1. Automatisches System (1) zur Behandlung von Fahrzeugkarosserien (60), insbesondere von Karosserien (60) für Personen- und gewerbliche Kraftfahrzeuge, wobei dieses automatische System eine Behandlungsstrecke (2) aufweist, an der entlang ein Schlitten (10), der eine Karosserie (60) trägt, gleitend angetrieben wird, diese Strecke (2) mindestens ein Karosserie (60)-Behandlungsbecken (20) umfasst, wo ein Paar aufnehmende Bogenelemente (31) vorgesehen sind, um den Schlitten von der Strecke (2) zu entfernen, wobei die Bogenelemente (31) von Antriebsmitteln angetrieben werden, um die Karosserie (60) in dieses mindestens eine Behandlungsbecken (20) einzuführen, diese Behandlungsstrecke mehrere Paare gegenüberliegender Rollen (3) aufweist, **dadurch gekennzeichnet, dass** diese Paare gegenüberliegender Rollen den Schlitten (20) direkt tragen und antreiben, dadurch, dass das automatische System (1) am mindestens einen Behandlungsbecken (20) Paare von Beckenrollen (21) aufweist, die einander gegenüberliegen und von Antriebsmitteln getragen werden, um diese Rollen axial anzutreiben und die Rollen vom Schlitten zu lösen, wobei diese Antriebsmittel ein Paar unabhängige Schrittmotoren (23) aufweist, dadurch, dass die Beckenrollen außerdem von anderen dedizierten Antriebsmotoren über Schraubenanordnungen oder Verbindungsstangen- und Kurbelanordnungen oder über Hydraulikzylinder mit einer geradlinigen Hin- und Herbewegung angetrieben werden, dadurch, dass diese Schrittmotoren (23) von Näherungssensoren gesteuert werden, und dass diese Näherungssensoren einen Näherungssensor umfassen, um die Betriebsgeschwindigkeit dieser Schrittmotoren zu verringern, einen zweiten Näherungssensor, um die Schrittmotoren zu stoppen, und einen dritten Näherungssensor, um den Stoppzustand zu bestätigen.

2. Automatisches System (1) nach Anspruch 1, **dadurch gekennzeichnet, dass** die Rollen (3) für jedes Paar eine Querwelle (4) umfassen, die an einem ihrer Endabschnitte Ritzelelemente (7) aufweist, die in einer versetzten Beziehung angeordnet sind, um Antriebsketten (6) mitzunehmen, wobei außerdem ein Getriebemotor (5) zum Antrieb dieser Querwelle (4) vorgesehen ist.

3. Automatisches System nach den vorherigen Ansprüchen, **dadurch gekennzeichnet, dass** das automatische System an diesen Bogenelementen außerdem Verriegelungsmittel umfasst, die auf lösbare Weise mit dem Schlitten im Eingriff stehen.

4. Automatisches System nach einem oder mehreren der vorherigen Ansprüche, **dadurch gekennzeichnet, dass** das Verriegelungsmittel ein Gegenbogenelement umfasst, das an einer nach oben hin offenen Gabel angeordnet ist, die auf den Bogenelementen definiert wird, wobei dieses Gegenbogenelement mit federnden Rückstellmitteln gekoppelt ist, die mit Stiften im Eingriff stehen können, und zudem Zugstangen vorgesehen sind, um diese Gegenbogenelemente außer Eingriff in eine geöffnete Position zu bringen.

5. Automatisches System nach einem oder mehreren der vorherigen Ansprüche, **dadurch gekennzeichnet, dass** das automatische System von einem elektronischen System gesteuert wird, das die Bewegungen zwischen den Karosserien oder anderen Fertigungsartikel derart steuert, dass die Karosserien oder Fertigungsartikel unter Verwendung einer Reihe aufeinanderfolgend angeordneter Bearbeitungsbecken mehreren verschiedenen Bearbeitungsvorgängen unterzogen werden.

6. Automatisches System nach einem oder mehreren der vorherigen Ansprüche, **dadurch gekennzeichnet, dass** das automatische System ausgelegt ist, um auf selektive Weise zu bewirken, dass eine Vielzahl von Karosserien oder Fertigungsartikeln, die zu bearbeiten sind, aufeinanderfolgend zugeführt wird, mit einer Möglichkeit, andere Tragschlitten an den Becken, in welchen Fertigungsartikel während ihrer Bearbeitungsvorgänge angeordnet sind, vorbeizuleiten.

7. Automatisches System nach einem oder mehreren der vorherigen Ansprüche, **dadurch gekennzeichnet, dass** das automatische System Nockenmittel zum Antrieb der Gegenbogenelemente aufweist, um die Bogenelemente ihrerseits in Bezug auf das Behandlungsbecken anzutreiben.

8. Automatisches System nach einem oder mehreren der vorherigen Ansprüche, **dadurch gekennzeichnet, dass** diese Nocken mit schrägen Nockenflächen versehen sind, die mit Schwenkhebeln im Eingriff stehen können, die an Endabschnitten der Bogenelemente angeordnet sind, und dass die Nocken mit Schwenkhebeln im Eingriff stehen, wenn die Bogenelemente gehoben werden, um mit dem Schlitten in Eingriff gebracht zu werden.

## Revendications

1. Système automatique (1) permettant de traiter des carrosseries de véhicule (60), en particulier des carrosseries de véhicules à moteur industriels et de voitures (60), ledit système automatique comprenant une piste de traitement (2) sur laquelle un ensemble de patins (10) supportant une carrosserie (60) est entraîné de manière coulissante, ladite piste (2) comportant au moins un bassin de traitement (20) de carrosserie (60), une paire d'éléments de levée en arc (31) permettant de retirer lesdits patins de ladite piste (2) étant prévue, lesdits éléments en arc (31) étant entraînés par des moyens d'entraînement permettant d'introduire ladite carrosserie (60) dans ledit au moins un bassin de traitement (20), ladite piste de traitement comportant également une pluralité de paires de rouleaux opposés (3), **caractérisé en ce que** lesdites paires de rouleaux opposés supportent et entraînent directement ledit ensemble de patins (20), **en ce que** ledit système automatique (1) comprend en outre, au niveau de l'au moins un bassin de traitement (20), des paires de rouleaux de bassin (21) opposés les uns aux autres et supportés par le moyen d'entraînement, afin d'entraîner de façon axiale lesdits rouleaux, de dégager lesdits rouleaux dudit ensemble de patins, ledit moyen d'entraînement comprenant une paire de moteurs pas à pas indépendants (23), **en ce que** lesdits rouleaux de bassin sont en outre entraînés avec un mouvement de va-et-vient rectiligne par d'autres moteurs d'entraînement spécialisés, par le biais d'ensembles de vis, ou d'ensembles de bielles et de tiges de connexion ou par le biais de vérins hydrauliques, **en ce que** lesdits moteurs pas à pas (23) sont entraînés par des capteurs de proximité et **en ce que** lesdits capteurs de proximité comprennent un capteur de proximité permettant de réduire la vitesse de fonctionnement desdits moteurs pas à pas, un deuxième capteur de proximité permettant d'arrêter lesdits moteurs pas à pas et un troisième capteur de proximité permettant de confirmer l'état d'arrêt.

2. Système automatique (1) selon la revendication (1), **caractérisé en ce que** lesdits rouleaux (3) comprennent, pour chaque paire, un arbre transversal (4) comportant, au niveau d'une partie d'extrémité, des éléments de pignon (7) agencés selon une relation décalée, pour entraîner les chaînes d'entraînement (6), un moteur à train d'engrenages (5) permettant d'entraîner ledit arbre transversal (4) étant en outre prévu.

3. Système automatique selon les revendications précédentes, **caractérisé en ce que** ledit système automatique comprend en outre, sur lesdits éléments en arc, des moyens de verrouillage qui sont engagés de manière amovible avec ledit ensemble de patins.

4. Système automatique selon l'une quelconque des revendications précédentes, **caractérisé en ce que** ledit moyen de verrouillage comprend un élément incurvé inversé agencé au niveau d'une fourche s'ouvrant vers le haut définie sur lesdits éléments en arc, ledit élément incurvé étant couplé au moyen de rappel résilient pour permettre un engagement avec lesdits pivots, des tirants permettant de dégager lesdits éléments incurvés en position ouverte étant en outre prévus.

5. Système automatique selon l'une quelconque des revendications précédentes, **caractérisé en ce que** ledit système automatique est entraîné par un système électronique entraînant les déplacements desdites carrosseries ou autres articles de fabrication, de manière à soumettre lesdites carrosseries ou articles de fabrication à une pluralité d'opérations différentes de traitement, en utilisant une série de bassins de traitement agencés successivement.

6. Système automatique selon l'une quelconque des revendications précédentes, **caractérisé en ce que** ledit système automatique est conçu pour faire en sorte, de manière sélective, qu'une pluralité de carrosseries ou d'articles de fabrication soient traités de manière à être fournies successivement, avec la possibilité de dévier d'autres ensembles de patins de support, dans lesdits bassins dans lesquels les articles de fabrication sont agencés au cours de leurs opérations de traitement.

7. Système automatique selon l'une quelconque des revendications précédentes, **caractérisé en ce que** ledit système automatique comprend des moyens à cames permettant d'entraîner lesdits éléments incurvés pour entraîner à leur tour lesdits éléments en arc par rapport au bassin de traitement.

8. Système automatique selon l'une quelconque des revendications précédentes, **caractérisé en ce que** lesdites cames sont dotées de surfaces à cames inclinées pouvant être engagées avec des leviers oscillants agencés au niveau de parties d'extrémité desdits éléments en arc et **en ce que** lesdites cames s'engagent avec des leviers oscillants lorsque lesdits éléments en arc sont relevés pour s'engager avec ledit ensemble de patins.
